# EUROPEAN PATENT APPLICATION

(11) **EP 1 813 351 A1**
(43) Date of publication of application: **01.08.2007**
(21) Application number: 05785908.4
(22) Date of filing: 21.09.2005
(51) Int. Cl.: B03C 3/38, B01D 46/00, B01D 50/00, B01D 51/02, B01D 53/94, B03C 3/06, B03C 3/40, B03C 3/41, B03C 3/45, B03C 3/49, F01N 3/02, F01N 3/24

(54) **GAS TREATMENT DEVICE**

(30) Priority: 01.10.2004 JP 2004289730
(71) Applicant: Isuzu Motors Limited, Tokyo 140-8722 (JP); Nissin Electric Co., Ltd., Kyoto-shi, Kyoto 615-8686 (JP); Mizuno, Akira, Nagoya-shi, Aichi 4600022 (JP)
(72) Inventor: KASAI, Junichi, c/o Isuzu Motors Limited,, Fujisawa-shi, Kanagawa 2528501 (JP); TAMAURA, Yoshinobu, c/o Isuzu Motors Limited,, Fujisawa-shi, Kanagawa 2528501 (JP); GABE, Masashi,2c/o Isuzu Motors Limited,, Fujisawa-shi, Kanagawa 2528501 (JP); NAITO, Kenta, c/o Nissin Electric Co., Ltd., Kyoto-shi, Kyoto 6158686 (JP); SSENBAYASHI, Satoru, c/o Nissin Electric Co., Ltd., Kyoto-shi, Kyoto 6158686 (JP)
(74) Representative: Seiffert, Klaus
(86) International application number: PCT/JP2005/017344
(87) International publication number: WO 2006/038461

(57) **Abstract**

A gas treatment device (1), comprising a charging agglomeration part (10) which charges and agglomerates components targeted for collection in gas by utilizing corona discharge, and a filter part (20) which collects the agglomerated components. The charging agglomeration part (10) is disposed on the upstream side, and the filter part (20) is disposed on the downstream side. By this configuration, using the agglomerating functions and precipitating functions of corona discharge and the precipitating functions of filters, ultra-fine particulates can be agglomerated and enlarged. Moreover, the present invention is a gas treatment device that has high performance and low pressure-loss and that is capable of being configured in a compact form factor such that it can also be used as an exhaust gas purification device mounted onboard an automobile.

## Description

### FIELD OF THE INVENTION

The present invention relates to a gas treatment device for the purification of gases such as factory gases, power plant gases, exhaust gases of automobiles, as well as gases from various manufacturing facilities and medical facilities, using corona discharge.

### DESCRIPTION OF THE RELATED ART

Electrostatic agglomeration devices, electrostatic precipitators and the like are used as gas treatment devices for factory gases, power plant gases, exhaust gases of automobiles, in addition to various manufacturing facilities and medical facilities. In these gas treatment devices, a high voltage applied between a corona electrode and a precipitation electrode generates a corona discharge in gas. As a result of this corona discharge, fine particulates suspended in gas become charged, and by electrostatic force this charged particulate is attracted to and captured at the precipitation electrode.

As one example of this type of gas treatment device, there is the device described in registered Japanese utility model 3019526, which is a cylindrical electric precipitator designed to eliminate trace contaminants from white smoke and mist present in factory smokes. By applying a high voltage to a high voltage discharge wire (corona electrode), formed by extending a fine metal wire inside a metallic circular tube, suspended fine particulate present in factory smokes and the like is electrostatically adsorbed to the cylindrical electrode and eliminated.

Additionally, as described for example in Japanese Patent Application Kokai Publication No. 1993-125928 and Japanese Patent No. 2849880, an exhaust gas purification device, in which a plurality of cylindrical discharge parts are installed, has also been proposed. These corona discharge parts are formed cylindrically, comprising a first electrode, which comprises a conductive pole, and a conductive second electrode which envelops the first electrode.

Furthermore, as described for example in Japanese Patent Application Kokai Publication No. 2002-30920 and 2002-30921, a plasma type exhaust gas purification device, in which a plurality of units, comprising a cylindrical exterior electrode and a cylindrical interior electrode extended in the direction of the cylinder shaft center, are arranged in parallel and housed in a casing, has also been proposed.

In these electrostatic precipitators which utilize discharge, the gas to be treated is passed through a hollow cylindrical body. A corona electrode is disposed in the near-center (shaft center) of the precipitation electrode, which is either formed as the hollow cylindrical body itself or is formed cylindrically and installed separately from the hollow cylindrical body. By applying a high voltage between the corona electrode and the precipitation electrode, a corona discharge is generated in gas. As a result of this corona discharge, suspended fine particulate in gas becomes charged.

As a result of the electric field formed between the corona electrode and the precipitation electrode, by electrostatic force this charged particulate is made to move toward the surface of the precipitation electrode, and is captured on the surface of the precipitation electrode. By a shaking-off process similar to the function of an electric precipitator, these captured particulates are made to disengage from the precipitation electrode. These disengaged particulates are collected and eliminated by combustion through the application of heat by a heater or other device installed adjacent to the precipitation electrode.

However, in the case where these electrostatic precipitators are used alone, there exists the problem of reentrainment. As a result of electrostatic precipitation, bond among particulates captured on the surface of the precipitation electrode occurs, and the fine particulates grow larger in size. The influence of the gas flow causes the captured particulates to detach from the surface of the precipitation electrode and be reentrained. As these reentrained particulates are repeatedly charged, captured, and detached in the gas treatment device, the particulate diameter gradually grows larger in size. Ultimately, these particulates are exhausted from the electrostatic precipitator as a result of reentrainment.

For that reason, as described for example in Japanese Patent Application Kokai Publication No. 2000-213331, an exhaust gas purification device, in which the precipitation electrode of the electrostatic precipitator is heated, such that collected PM is eliminated by combustion, has been proposed. In order to eliminate particulate solid matter present in the exhaust gas of internal combustion engine and the like, in this device, a catalyst layer with a catalyst coating chiefly comprising an electrically conductive metal oxide is applied to the surface of the precipitation electrode in an electric precipitation filter. Thus the particulate solid matter collected at the precipitation electrode can be eliminated by oxidation combustion at a comparatively low temperature.

Disposing a heater on the precipitation electrode raises the temperature of gas inside the discharge space as well as the electrode. Consequently, there is a danger that this could lead to unstable discharge. Furthermore, while a catalyst layer is effective in the oxidation combustion of gaseous component, it does not necessarily function effectively in the oxidation combustion of particulate solid matter, particularly the Soot found in diesel exhaust gas. Therefore, there has been the problem of being unable to achieve adequate results in practice given the surface area of the electrode, particularly that of an electrostatic precipitator. Furthermore, there has also been the problem of these technologies being unable to achieve the fine particulate elimination performance needed to adequately comply with the exhaust gas regulations growing stricter every year.

Additionally, in the treatment of exhaust gas from equipment such as diesel engines found onboard automobiles, exhaust gas comprises not only solidified component but also gasified component. It is necessary to eliminate this gasified component as well. PM(Particulate Matter) found in exhaust gas is the component targeted for treatment. This PM comprises, soot, which is said to be difficult to combust in particular, and SOF(Soluble Organic Fraction), which becomes vapor at high temperatures. This soot is engine exhaust matter chiefly composed of carbon. SOF is the component that dissolves in organic solvents such as benzene or toluene and is derived from combustion residues of fuel or oil. This SOF can be combusted on the surface of an oxidation catalyst.

Regarding devices which eliminate the solid component and the gasified component, as described for example in Japanese Patent Application Kokai Publication No. 1999-128660, a purification device has been proposed wherein a precipitation means such as a bag filter is installed on the upstream side, and a plasma generating means is installed on the downstream side. In this device, dust such as soot particulates in gas is collected by the bag filter or a similar device. Additionally, once the particulates have been eliminated, odorous component as well as toxic component in gas can be broken down and eliminated.

However, in the case where solid component is collected using a bag filter, a fine-meshed filter is necessary in order to improve the fine particulates collection ratio. There is a problem in that with a fine-meshed filter pressure loss is increased.

In contrast, the authors of the present invention have made the following discoveries as a result of experimentation and other work regarding SOF.

When cooled, condensed, and liquefied, gasified SOF present in exhaust gas becomes a mist with adhesive properties. Using the same capturing principles as birdlime, this misty SOF can be used to capture, agglomerate, and enlarge ultra-fine particulates. Also, when collecting these ultra-fine particulates, it is effective to install a filter or other precipitator downstream to an electric agglomeration device in order to utilize the agglomerating-enlarging functions of the SOF. Additionally, through cooling exhaust gas and liquefying the SOF in an electric agglomeration device when used in combination with this precipitator, the collection efficiency is significantly improved.

Additionally, in a configuration whereby the filter is disposed on the downstream side, ultra-fine particulates in exhaust gas are agglomerated and enlarged by the synergistic effect between the electrostatic mechanism and the adhesive function of the liquefied SOF. As a result, the diameter of particulates exhausted from the electric agglomeration device becomes larger, and therefore these particulates can be easily captured even with a large-meshed filter.

Furthermore, SOF in a gasified state can be oxidized by an oxidation catalyst. Typically the oxidation catalyst is installed anterior to the exhaust pipe, where the gas temperature is high, and an electric precipitator is installed posterior to the exhaust pipe, where the gas temperature is lowered. This catalyst configuration is considered to be effective for the following reasons. The catalytic activity of oxidation catalysts increases as the temperature increases. In electric agglomeration devices, the formation of a stable corona discharge becomes difficult when the gas temperature exceeds 500°C. When the gas temperature exceeds 650°C, adequate electrical input and other factors become particularly difficult. In a high temperature region, the functionality of the electric precipitation decreases.

However, in the case where the oxidation catalyst is installed upstream to the electric agglomeration device, SOF will be oxidized by the oxidation catalyst. Consequently, the capturing effect of the ultra-fine particulates in the electric agglomeration device will be lost. As a result, the collection efficiency will not improve.

Moreover, when a agglomerated body comprising substances such as SOF and soot flows into the oxidation catalyst, the catalyst surface is covered over by hard-to-combust soot, thus weakening the mechanism of oxidation-combustion of SOF on the catalyst surface. Thus, it becomes necessary to install a large-meshed metal filter upstream to the oxidation catalyst to capture and eliminate by combustion these agglomerated bodies. Thus the end result shows that exhaust gas can be purified most effectively when the components are disposed in the following order from the upstream side: electric agglomeration device, filter, and oxidation catalyst.

### SUMMARY OF THE INVENTION

In light of the findings described above and with the intention of solving the foregoing problems, it is the object of the present invention to provide a gas treatment device which can agglomerate and enlarge ultra-fine particulates found in gases. This is achieved by making use of the agglomerating functions as well as the precipitating functions of corona discharges, and the precipitating functions of filters. Furthermore, another object of the present invention is to provide a high performance, low pressure-loss gas treatment device that is capable of being configured in a compact form factor such that it can also be used as an exhaust gas purification device mounted onboard an automobile.

The gas treatment device achieving the foregoing objects is configured such that it comprises a charging agglomeration part which charges and agglomerates components targeted for collection in gas by utilizing corona discharge, and a filter part for collecting the agglomerated components, and wherein the charging agglomeration part is disposed on the upstream side of gas flow, and the filter part is disposed on the downstream side of gas flow.

According to this configuration, the device both coarsens and enlarges components targeted for collection in the upstream charging agglomeration part, and subsequently collects the component in the downstream filter part. As a result, in addition to improving the collection efficiency, the mesh size of the latter filter can be made comparatively large. Therefore, pressure loss can be reduced.

In other words, utilizing the charge from the corona discharge in the upstream charging agglomeration part, soot and other solid components in gas are charged, and in addition, SOF (soluble organic fraction) and other liquid components in gas are used as a binder, thereby making it possible to efficiently agglomerate electrically components targeted for collection. These agglomerated bodies are temporarily collected on the surface of the precipitation electrode of the charging agglomeration part, but are enlarged on the wall surface. By the gas flow, they are detached from the surface of the precipitation electrode and reentrained. These reentrained agglomerated bodies are collected in the downstream filter part.

This components targeted for collection that flows into the downstream filter part have been agglomerated and enlarged by the charging agglomeration part. For that reason, it can be efficiently collected even if the filter mesh is comparatively large. Consequently, the filter part can be formed of a comparatively large-meshed, low pressure-loss filter. As a result, it becomes possible to use a filter such as a metal filter, which has a comparatively large mesh but also has superior heat-resisting properties.

In the case where the gas to be treated is an exhaust gas from a diesel engine, the device is configured such that when the collected quantity of PM including substances such as soot and SOF at the filter exceeds a predetermined threshold limit, the filter temperature is raised and the PM is eliminated by combustion. In this case, by using a metal filter, PM can be eliminated without concern for melting damage caused by flammable combustion, as metal filters possess superior heat-resisting properties.

Additionally, by configuring the gas treatment device described above when the oxidation catalyst is installed downstream to the filter part, via this oxidation catalyst, vaporized component such as SOF which has passed through the charging agglomeration part and the filter part in its gasified state can be oxidized and eliminated by the oxidation catalyst. However, in the case where this oxidation catalyst is disposed upstream to the charging agglomeration part and/or the filter part, gasified components such as SOF will be oxidized through the oxidation catalyst. For that reason, using substances such as SOF in order to agglomerate soot becomes impossible. As a result, contributing an improvement to the collection efficiency of the filter part becomes impossible.

Furthermore, when the filter part in the gas treatment device described above is formed using a metal filter, the filter part is resistant to melting damage even at high temperatures, such as during the elimination by combustion of collected matter like PM. For that reason, the filter can be easily regenerated via flammable combustion. With conventional filters (DPF) such as alumina or cordierite there exists the danger of melting damage at high temperatures, and in addition these filters have the drawback of being vulnerable to shock forces. However, by implementing a metal filter for the filter part, these drawbacks cease to be an issue.

Furthermore, in the case where the gas to be treated by the above-described gas treatment device is above 100°C and below 650°C, the device is configured such that the gas is cooled at the charging agglomeration part. Via this gas cooling, the gaseous SOF portion is condensed. This condensed SOF portion exhibits properties similar to birdlime and is capable of efficiently agglomerating fine particulates such as soot. This is thought to be the result of the development of liquid cross linking between the fine particulates via the condensed SOF portion. Additionally, although it is difficult to capture the gaseous SOF portion using the charging action of an electric precipitator, as a result of cooling the gas the partially misted SOF portion is attracted to the precipitation electrode due to the charging action. In this additional manner the agglomeration of fine particulates is promoted.

SOF comprises a variety of components, and thus it is difficult to concretely specify factors such as its condensation temperature and vapor pressure curve. However, from experimentation the following points have been understood. When the exhaust gas temperature is below 100°C, there is no notable difference in agglomeration action derived from cooling. When the exhaust gas temperature exceeds 100°C the agglomeration action derived from cooling is notable. An upper limit of the temperature with regards to the effects of cooling SOF has not been ascertained. However, the upper limit of temperature for a charging agglomeration part to stably produce a discharge formation is approximately 650°C, and in practice exhaust gas temperatures rarely exceed 650°C. Based on these findings, the upper limit of the applicable temperature range has been experimentally determined to be approximately 650°C.

The gas cooling referred to here includes active cooling systems such as the installation of a cooling device that circulates a cooling medium in the charging agglomeration part, or a system whereby air is blown onto the charging agglomeration part to promote the heat dissipation. However, passive cooling systems based on natural heat dissipation mechanisms via natural convection and/or heat radiation, and not just active cooling systems, are also included. For example, the charging agglomeration part may be exposed to outside air. Consequently, the gas cooling referred to herein shall signify that active heat-retention means are not taken.

In addition, the gas treatment device described above is configured such that the precipitation electrode of the charging agglomeration part is formed as a hollow cylindrical body low voltage electrode, and the corona electrode is formed as a linear body high voltage electrode disposed inside the hollow cylindrical body. Furthermore, the configuration is such that the hollow cylindrical body also acts as the passage walls of the exhaust gas passage and in addition acts as the gas cooling part.

As a result of this configuration, the structure can be simplified since the hollow cylindrical body acts as the gas cooling part, and in addition a large cooling area can be obtained. For that reason, it is easy to increase the cooling effect. Particularly, by making the hollow cylindrical body the outer wall of the gas passage, and by making this outer wall a heat-dissipating surface, it becomes possible to cool the gas using natural heat dissipation via natural convection and/or heat radiation, such as in the case where the outside air temperature is low and/or a cold wind blows against the hollow cylindrical body. Since electrostatic agglomeration action occurs near the precipitation electrode, it is not necessary to cool the entire gas. Therefore, the electrostatic agglomeration effect will be promoted if the vicinity of the precipitation electrode can be cooled.

It should be appreciated that the hollow cylindrical body referred to herein is typically formed such that its cross-section is circular in shape. However, it is also acceptable if the shape of the cross-section is a polygonal shape, including triangular and rectangular shapes, and/or ellipsoidal shapes. In other words, the hollow cylindrical body referred to herein has an inlet at one end and an outlet at the other end, and wherein the intervening space is enclosed by a wall surface, forming a cylindrical shape.

In addition, the gas treatment device described above is configured such that the precipitation electrode of the charging agglomeration part is formed as a hollow cylindrical body low voltage electrode, and the corona electrode is formed as a linear body high voltage electrode disposed inside the hollow cylindrical body. Furthermore, the configuration is such that a turbulent flow promoting means, which promotes turbulent flow in the gas flow near the inner surface of the hollow cylindrical body, is installed on or near the surface of the hollow cylindrical body.

This turbulent flow promoting means can be configured as an uneven structure (projecting structure). This uneven structure can be configured in the following ways: either a singular linear body or a plurality of linear bodies (round bars and/or angular bars) may be made into a spiral shape and inserted into the hollow cylindrical body; the inner surface of the hollow cylindrical body may be grooved; ring-shaped projections may be installed at intervals inside the hollow cylindrical body in the direction of its axis; fins with a three-dimensional structure may be installed; or an irregular unevenness may be applied using a blast treatment. The uneven structure may be formed by uniformly applying one of the above uneven formations, or by applying several and disposing them in a distribution.

Furthermore, not only the hollow cylindrical body itself may be processed, but also the hollow cylindrical body may be modified such that materials can be inserted into it, and plate materials to which an uneven formation has been applied, and/or plane bodies or plate materials which are sold already possessing uneven formations may be inserted. Materials such as wire mesh, punching metal, expander metal and other projecting sheet materials are useful as plate materials. Additionally, slit grills, diamond screens, dimple screens (non-porous), dimple screens (porous), slit window screens, bridge window screens, triangle window screens, compass window screens, and various other punching screens can be used.

Because of this turbulent flow promoting means, it is possible to make the flow passage turbulent; in particular, it promotes the development of turbulence in gas near the surface of the hollow cylindrical body, and increases flow agitation effects in the direction transverse to the flow passage. For that reason, the time required to charge components present in gas in the flow passage space as a whole is shortened, charged particulate contact with the counter surface of the precipitation electrode is made easier, and it is possible to decrease the flow speed of gas in the main flow direction while increasing the stagnant flow time near the counter surface. Furthermore, it becomes possible to effectively capture charged particulates at the precipitation electrode. Thus, the agglomeration effects increase. In other words, because of the turbulent flow promoting means, the charging effects in gas at the charging agglomeration part are increased and in addition the agglomeration action is promoted. As a result, the latter filter collection functions can be improved.

The configuration of the gas treatment device described above is such that the gas passage walls of the charging agglomeration part are formed in the shape of a hollow cylindrical body, and wherein a precipitation electrode which acts as a low voltage electrode is formed as a hollow cylindrical body having a conductive turbulent flow promoting means disposed near the surface of the gas passage walls. The configuration is furthermore such that a corona electrode is formed as a high voltage linear body electrode disposed inside the hollow cylindrical body. This configuration is such that the hollow cylindrical body can also be configured as an insulating body. As a result, the degree of freedom in its design can be increased.

The configuration of the gas treatment device described above is such that the charging agglomeration part is formed by arranging in parallel a plurality of charging agglomeration units having the corona electrode and the hollow cylindrical body. This configuration is such that a large volume of gas can be efficiently treated. Additionally, the surface area of the outer wall of the hollow cylindrical body can be made significantly large. Consequently, the gas cooling performance can be significantly improved.

As outlined in the foregoing description, the invention is a gas treatment device which is an upstream charging agglomeration part agglomerates and enlarges components targeted for collection, and in which a downstream filter part collects the components. Therefore, the collection efficiency can be significantly improved. Moreover, this can be achieved even with a comparatively large-meshed filter. Consequently, pressure loss at the filter can be reduced.

In addition, in a configuration wherein an oxidation catalyst is installed downstream to the filter part, via this oxidation catalyst components such as SOF which have passed through the charging agglomeration part and the filter part in its gasified state can be oxidized and eliminated by the oxidation catalyst. Consequently, the efficiency of eliminating components such as PM present in gas can be improved.

In addition, in a configuration wherein the filter part comprises a metal filter, the filter is resistant to melting damage even at high temperatures, such as during the elimination by combustion of collected matter such as PM. For that reason, the filter can be easily regenerated via flammable combustion.

Therefore, the present invention is a gas treatment device in which, by utilizing the principles of corona discharge, fine particulates suspended in a gas can be efficiently agglomerated and enlarged, and furthermore in which a low pressure-loss large-meshed filter can be used. For that reason, it is possible to improve the elimination performance of ultra-fine particulates, to improve fuel efficiency as a result of low maintenance of exhaust pressure, and to reduce the burden on the turbo as a result of stable exhaust pressure. As a result, the present invention is a high performance, low pressure-loss gas treatment device that is capable of being configured in a compact form factor such that it can also be used as an exhaust gas purification device mounted onboard an automobile.

### BRIEF DESCRIPTION OF THE DRAWINGS

Fig. 1 shows a schematic configuration of a gas treatment device according to the present invention.
Fig. 2 is a sectional side view of a charging agglomeration unit.
Fig. 3 shows a cross-sectional view of a charging agglomeration unit wherein the cross-sectional shape of the hollow cylindrical body is circular.
Fig. 4 shows a cross-sectional view of a charging agglomeration unit wherein the cross-sectional shape of the hollow cylindrical body is flattened, the ends are circular, and a plurality of corona electrode are installed.
Fig. 5 shows a cross-sectional view schematically illustrating a configuration wherein a charging agglomeration unit is naturally cooled.
Fig. 6 shows a cross-sectional view schematically illustrating a configuration of a charging agglomeration unit forced to be cooled with a fan.
Fig. 7 schematically illustrates a configuration of a charging agglomeration unit forced to be cooled with a double-pipe.
Fig. 8 is a sectional side view of a charging agglomeration unit wherein a turbulent flow promoting means is installed.
Fig. 9 shows a cross-sectional view of a charging agglomeration unit wherein the cross-sectional shape of the hollow cylindrical body is circular, and a turbulent flow promoting means is installed on the body.
Fig. 10 shows a cross-sectional view of a charging agglomeration unit wherein the cross-sectional shape of the hollow cylindrical body is flattened, the ends are circular, a turbulent flow promoting means is installed on the body, and a plurality of corona electrodes are installed,.
Fig. 11 is a sectional side view of a charging agglomeration unit configured such that the precipitation electrode and the hollow cylindrical body are discrete.
Fig. 12 shows a cross-sectional view of a charging agglomeration unit wherein the precipitation electrode and the hollow cylindrical body are discrete, a turbulent flow promoting means is installed on the electrode, and the cross-sectional shape of the body is circular.
Fig. 13 shows a cross-sectional view of a charging agglomeration unit wherein the precipitation electrode and the hollow cylindrical body are discrete, a turbulent flow promoting means is installed on the electrode, the cross-sectional shape of the body is flattened, the ends are circular, and a plurality of corona electrodes are installed.
Fig. 14 shows a cross-sectional view of a charging agglomeration unit wherein the precipitation electrode and the hollow cylindrical body are discrete, a turbulent flow promoting means is installed on the electrode, and the cross-sectional shape of the body is rectangular.
Fig. 15 shows a cross-sectional view of a charging agglomeration unit wherein the precipitation electrode, which also acts as a turbulent flow promoting means, is discrete from the hollow cylindrical body, a turbulent flow promoting means is installed on the electrode, the cross-sectional shape of the body is oblong and rectangular, and a plurality of corona electrodes are installed.

### DETAILED DESCRIPTION OF THE INVENTION

Hereinafter, the modes for carrying out the gas treatment device according to the present invention will take as an example a gas treatment device wherein the gas to be treated is exhaust gas from a diesel engine, and will be described with reference to the accompanying drawings.

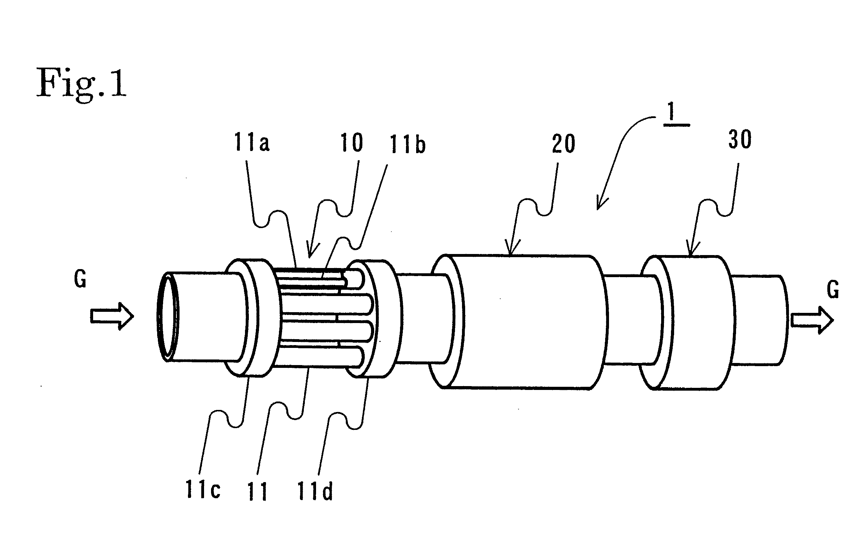

As shown in Fig. 1, a gas treatment device 1 is configured such that it comprises an upstream charging agglomeration part 10 and a downstream filter part 20. Furthermore, it is additionally configured such that an oxidation catalyst 30 is installed downstream to the filter part 20. The charging agglomeration part 10 charges and agglomerates components targeted for collection via corona discharge. The filter part 20 collects components agglomerated by the charging agglomeration part 10.

In other words, the charging agglomeration part 10, which via corona discharge coarsens, enlarges, and temporarily collects PM, is disposed in anterior. The filter part 20, which collects the enlarged PM reentrained from the charging agglomeration part 10, is disposed centrally. Furthermore, the oxidation catalyst 30, which purifies vaporized component such as gasified SOF, is disposed in posterior.

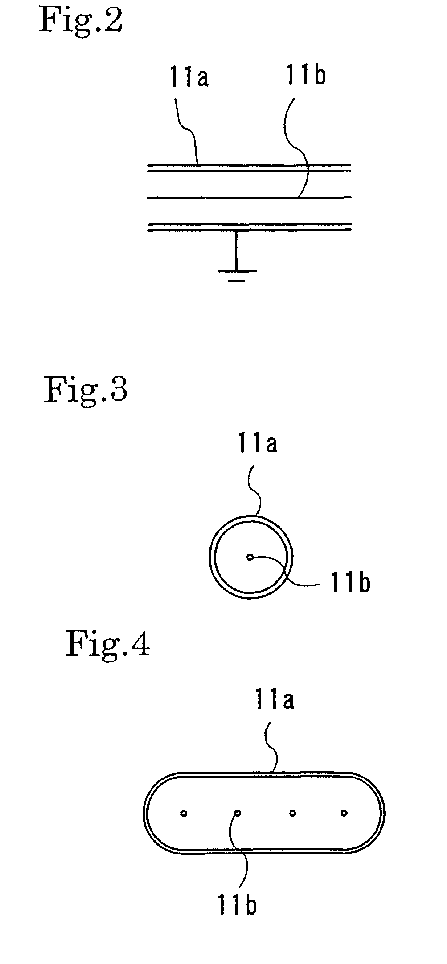

The charging agglomeration part 10 is configured such that a plurality of charging agglomeration units, for example eight charging agglomeration unit 11, are arranged in parallel. As shown in Figs. 2 and 3, the charging agglomeration unit 11 is configured such that it comprises a precipitation electrode 11a, which is formed as a low voltage electrode, and a corona electrode 11b, which is formed as a high voltage electrode.

The precipitation electrode 11a is formed of, for example, a conductive material such as SUS304, and is formed as a hollow cylindrical body such as a cylinder. The precipitation electrode 11a is connected to an upstream gas inlet chamber 11c and a downstream gas outlet chamber 11d. This hollow cylindrical body 11a, which is a precipitation electrode, also acts as the passage walls of the gas passage. The cross-sectional shape of this hollow cylindrical body 11a has no particular restrictions. In consideration of factors such as the stability of the corona discharge it is preferable for the cross-sectional shape to be circular, but shapes such as regular square shapes are also acceptable. In particular, in the case where a plurality of corona electrodes 11b are installed, the cross-sectional shape may be ellipsoidal, triangular, rectangular and oblong, or other polygonal shapes.

The corona electrode 11b may be any electrode whose coefficient of electric field concentration is high. The corona electrode 11b is formed as a linear body electrode, and may be a wire type electrode such as a fine wire electrode, an angular electrode, or an electrode with projections attached, and/or a bar type electrode. For example, the corona electrode 11b may be formed as a SUS304 hollow wire. Additionally, the corona electrode 11b is disposed centrally inside the hollow cylindrical body 11b; for example, in the shaft center of the hollow cylindrical body. Also, as shown in Fig. 4, a plurality of corona electrodes 11b may also be installed inside the hollow cylindrical body 11b.

The precipitation electrode 11a and the corona electrode 11b are configured such that via insulators or other materials they are both in an electrically insulated condition. The precipitation electrode 11a is electrically earthed, and is maintained at the earth electric potential. Additionally, the precipitation electrode 11a is maintained at a separate earth electric potential when necessary. On the other hand, the corona electrode 11b is connected to a high voltage current source. This high voltage current source generates a high voltage. This high voltage is applied to the corona electrode 11b. It is preferable for this high voltage to generally make use of a negative polarity direct-current voltage. However, the voltage may be any of direct-current, alternating-current, or pulse types. In addition, the polarity may also be either negative or positive. Also, the voltage value may be any voltage value that is sufficient to generate a corona discharge in gas G passing between the hollow cylindrical body 11a and the corona electrode 11b.

In addition, the hollow cylindrical body 11a is configured such that its passage walls are cooling walls (the gas cooling part), and as such is capable of cooling gas G at the charging agglomeration part 10. In other words, the outer surface of the hollow cylindrical body 11a is formed to be cooled through naturally air-cooling or forced cooling.

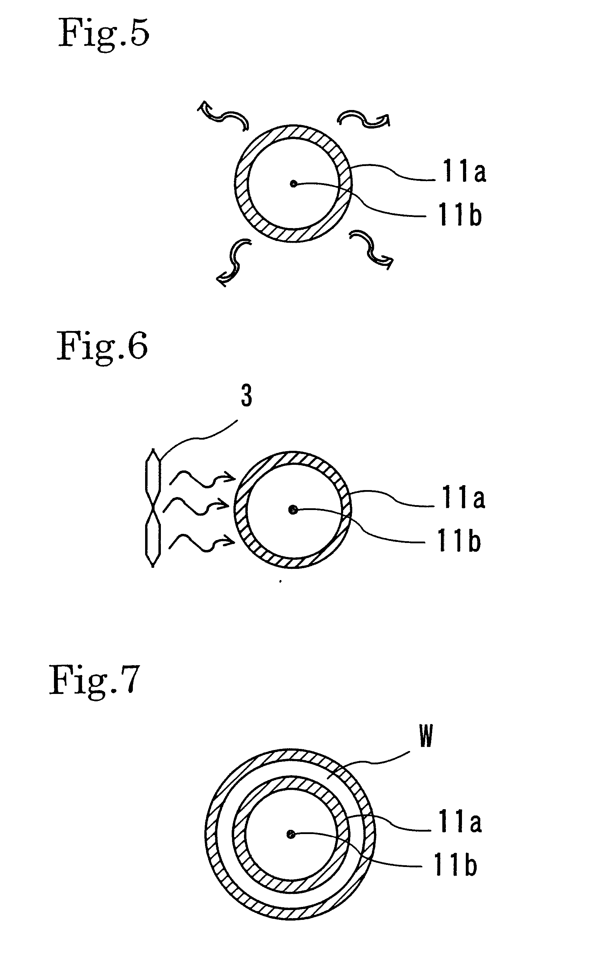

This natural air-cooling system can be configured in one of the following ways. As shown in Fig. 5, the outer surface of the hollow cylindrical body 11a is configured in a state open to the atmosphere, and heat-retention means are not applied to the outer surface of the hollow cylindrical body 11a. Alternatively, in the situation where the hollow cylindrical body 11a is inserted into a case of the gas treatment device 1, the hollow cylindrical body comprising the case (not shown) is not sealed, and ventilation holes are installed in the hollow cylindrical body. As a result of these configurations, contact with the outside air is made easier, and heat transmission effects caused by natural convective heat transfer at the outer surface of the hollow cylindrical body 11a are increased.

Alternatively, the temperature of surrounding members is made lower so as to promote cooling effects due to thermal radiation. Moreover, a low-temperature heat conducting body is brought into contact with in order to increase cooling effects due to heat conduction. Furthermore, cooling fins can also be installed at the outer surface of the hollow cylindrical body 11a, which promote the heat dissipation to the outer of the hollow cylindrical body 11a. Fins which for example are generally used in heat transfer devices and the like, such as smooth annular fins, slot fins, tent fins, strip fins, and wire loop fins may be used as cooling fins.

In addition, forced cooling systems are configured in the following ways. As shown in Fig. 6, devices such as a fan 3 blow air across the outer surface of the hollow cylindrical body 11a, performing forced cooling via convective heat transfer. Alternatively, as shown in Fig. 7, the hollow cylindrical body 11a is formed as a double pipe through that a cooling medium W such as cooling water passes, performing forced cooling of the hollow cylindrical body 11a via a cooling medium. The forced cooling system is not limited to these cooling methods, and other general cooling methods can be applied.

In addition, in the case where the gas treatment device 1 is mounted onboard an automobile, parts of the charging agglomeration part 10 such as the hollow cylindrical body 11 are exposed to the outside air and are impacted by strong winds as a result of the motion of the automobile. Therefore, gas G will be cooled as a result of natural heat dissipation caused by natural convection and/or heat radiation. Consequently, cooling effects can be achieved even without installing special cooling means or active cooling means, as long as active heat-retention means are not installed.

The gas cooling system is particularly effective in the case where the gas G to be treated is at a temperature above 100°C and below 650°C. Since SOF comprises a variety of components, factors such as its condensation temperature and vapor pressure curve are difficult to specify concretely. However, from experimentation the following points have been understood. When the exhaust gas temperature is below 100°C, there is no notable difference in agglomeration action derived from cooling. When the exhaust gas temperature exceeds 100°C the agglomeration action derived from cooling is notable. An upper limit of the temperature with regards to the effects of cooling SOF has not been ascertained. However, the upper limit of temperature for a charging agglomeration part to stably produce a discharge formation is approximately 650°C, and in practice exhaust gas temperatures rarely exceed 650°C. Based on these findings, the upper limit of the applicable temperature range has been experimentally determined to be approximately 650°C.

The filter part 20 is configured such that it comprises a filter for the purpose of collecting and eliminating agglomerated bodies that have been enlarged and reentrained from the charging agglomeration part 10. In addition, in the embodiment wherein the gas to be treated is exhaust gas from a diesel engine, the filter part comprises a diesel particulate filter (DPF). The DPF may be fabricated from a ceramic material with superior heat-resistant properties, such as cordierite, silicon, carbide, alumina fiber, or silica fiber. Alternatively, the DPF may be fabricated from a metal material such as stainless steel. By choosing a metal material for the DPF, the filter part is strong versus thermal shock and thermal stress, being resistant to melting damage even at high temperatures such as during the elimination by combustion of collected PM. For that reason, DPF regeneration via flammable combustion also becomes possible.

In addition, the filter part 20 collects components targeted for collection downstream, after the upstream charging agglomeration part 10 has agglomerated and enlarged the components. For that reason, it is possible for the filter part 20 to comprise a low pressure-loss, comparatively large-meshed filter. In addition, the filter part 20 may also be configured such that it comprises a heater for the purpose of eliminating by combustion collected matter when the quantity of collected matter accumulates and the filter mesh becomes blocked. When a catalyst such as platinum is carried on the device, it becomes possible to disintegrate collected PM at a low temperature as a result of the catalyst action.

The oxidation catalyst 30 comprises a ceramic carrying body of a honeycomb or similar structure, and carries an oxidation catalyst such as platinum. The oxidation catalyst 30 purifies vaporized component such as SOF which has passed through the filter part 20 in a gaseous phase without having being liquefied by the gas cooling system.

Purification of gas G is performed in the following manner in the gas treatment device 1.

At the charging agglomeration part 10 installed in the upstream extremity, gas G passes through a gas inlet chamber 11c to the respective insides of the cylindrical bodies (precipitation electrodes) 11a of the charging agglomeration units 11. Additionally, a high voltage is applied between the corona electrodes 11b and the precipitation electrodes 11a, forming a corona discharge in the inside of the precipitation electrodes 11a. As a result of this corona discharge, component such as PM targeted for collection in gas G passing through the insides of the precipitation electrodes 11a is charged, and these charged particulates agglomerate.

Using the charge caused by the corona discharge, solid component such as soot in gas is charged in the charging agglomeration part 10. Additionally, gas G is cooled. As a result of this cooling, liquid components such as misty SOF (soluble organic fraction) that has been condensed perform a role as a binder. For that reason, the binding properties of liquid component that has been condensed trough cooling can be used in the gas treatment device 1. Consequently, fine PM particulates can be more efficiently agglomerated.

These agglomerated bodies are made to move to the precipitation electrodes 11a by clone force as a result of the electric fields existing between the corona electrodes 11b and the precipitation electrodes 11a. These agglomerated bodies are temporarily collected on the surface of the precipitation electrodes 11a. Alternatively, these agglomerated bodies may make contact with the precipitation electrodes 11a and lose their charge, or otherwise may be further enlarged on the wall surface. As a result, due to the gas G flow these agglomerated bodies are detached from the surfaces of the precipitation electrodes 11a and are reentrained.

In addition, the reentrained agglomerated bodies and the components targeted for collection which flows directly through are collected at the filter part 20. However, the agglomerated bodies, which have been reentrained and/or agglomerated around SOF, are coarsened and enlarged. For that reason, these agglomerated bodies can be efficiently collected even with a comparatively large-meshed filter. Consequently, in comparison with the case where only a typical physical filter is used to mechanically trap PM, finer PM particulates can be efficiently collected.

In addition, the filter part 20 may be configured such that, in the case where components targeted for collection such as PM and other substances, including soot and SOF, progressively accumulates and blocks the filter mesh, such that a predetermined threshold limit is exceeded, then heat is applied to the filter by an electric heater (not shown) installed at the filter, thus raising the filter temperature to a point above the combustion temperature of the PM and thereby eliminating by combustion the PM. Even if the temperature rise of the filter is localized, once PM combustion is initiated then heat of combustion will be generated and the combustion will propagate. For that reason, the PM of the entire filter will be eliminated by combustion, and the entire filter will be regenerated. In this case, by configuring the filter part 20 to comprise a metal filter, the filter part 20 will be resistant to melting damage even at high temperatures, such as during the elimination by combustion of collected matter such as PM. Therefore, flammable combustion can be used to easily regenerate the filter.

In addition, at the oxidation catalyst 30 installed in the downstream extremity, component such as SOF which has passed through the charging agglomeration part 10 and the filter part 20 in a gasified state is oxidized and eliminated. As a result, even vaporized component such as uncondensed SOF can be eliminated.

Consequently, as a result of the configuration of the gas treatment device 1 described above, the cohesive properties of liquefied component such as SOF condensed by a gas cooling system can be utilized at the charging agglomeration part 10, in addition to the electric precipitation properties of corona discharge. Therefore, fine particulates suspended in gas G can be efficiently agglomerated and enlarged. As a result, a low pressure-loss large-meshed filter can be used at the filter part 20. For that reason, filter pressure loss can be reduced. Furthermore, the filter can be in continuous operation for a substantially long time until the filter becomes blocked. Moreover, since component such as gasified SOF is oxidized and eliminated at the oxidation catalyst 30, PM elimination performance can be further improved.

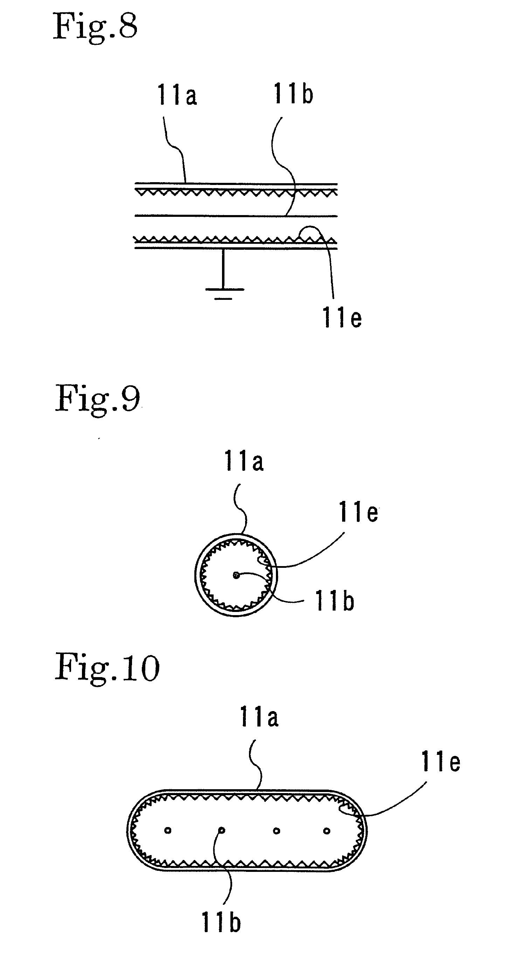

Alternative embodiments of the charging agglomeration unit 11 of the charging agglomeration part 10 will now be described. As shown in Figs. 8 to 10, other embodiments are configured such that a turbulent flow promoting means 11e is installed either on the surface of or near the surface of the hollow cylindrical body 11a, in order to promote turbulent flow in gas G flow near the inner surface of the hollow cylindrical body 11a of the charging agglomeration part 10. This turbulent flow promoting means 11e may be configured as an uneven structure (projecting structure). Projecting structure for the purpose of improving heat transfer characteristics can be referred to in this uneven structure. In addition, the turbulent flow promoting means 11e may be installed by processing the surface of the hollow cylindrical body 11a. Furthermore, the turbulent flow promoting means 11e may be a structure discrete from the hollow cylindrical body 11a and disposed by attachment on or suspension from the surface of the hollow cylindrical body 11a.

This uneven structure can be formed in the following ways. Either a singular linear object or a plurality of linear objects (round bars and/or angular bars) may be made into a spiral shape and inserted into the hollow cylindrical body 11a such that the spiral winds around the inner surface of the hollow cylindrical body 11a. A regular unevenness may be installed such as a trapezoidal projection, lattice groove, or spiral groove formed by grooving the inner surface of the hollow cylindrical body 11a, thus creating a pipe structure whose inner surface is grooved. Ring-shaped projections may be installed at intervals on the inner surface of the hollow cylindrical body 11a in the direction of the axis of the hollow cylindrical body 11a. Fins with a three-dimensional structure may be installed. An irregular unevenness may be applied using a blast treatment. The uneven structure may be formed by uniformly applying one of the above uneven formations, or by applying several and disposing them in a distribution.

Furthermore, not only may the hollow cylindrical body 11a itself be processed, but also the hollow cylindrical body 11a may be modified such that materials can be inserted into it, and thereby plate materials to which an uneven formation has been applied and/or plate materials already formed having an uneven formation may be inserted to form the uneven structure. Alternatively, plane bodies which are sold already having uneven formations may be inserted into hollow cylindrical body 11a to form the uneven structure. Materials such as wire mesh, punching metal, expander metal and other projecting sheet materials are useful as plane bodies. Additionally, slit grills, diamond screens, dimple screens (non-porous), dimple screens (porous), slit window screens, bridge window screens, triangle window screens, compass window screens, and various other punching screens can be used as the plane bodies.

Regarding the dimensions of the uneven structure, given a representative cross-sectional length D of the hollow cylindrical body 11a, and a maximum surface roughness ε of the inner surface, then the value of the relative roughness (ε / D) is preferably above 0.01, and below 0.1. This relative roughness (ε / D) value is to be above 0.01 so as to achieve preferable turbulent flow promoting effects. The relative roughness value is to be below 0.1 so as to achieve the spatial uniformity and stability for preferable discharge.

To further elaborate on the representative cross-sectional length D and the relative roughness (ε / D), which can also be called a dimensionless representative measurement of the uneven structure of the counter surface of the hollow cylindrical body 11a, the representative length D is the same length used in fields such as heat transfer engineering. Given a cross-sectional area S of a flow passage enclosed by the hollow cylindrical body 11a, and a leak edge length P, then D=4S/P. In the case where the hollow cylindrical body 11a is a circular tube, then D is equivalent to the diameter of the circular tube.

In this embodiment of the charging agglomeration unit, turbulent flow in the gas flow near the surface of the hollow cylindrical body 11a is promoted by a turbulent flow promoting means 11e. For that reason, agitation effects in the direction transverse to the flow passage are increased. Consequently, the time required to charge component present in gas in the flow passage space as a whole is shortened, charged particulates contact with the counter surface of the precipitation electrode is made easier, and it is possible to decrease the flow speed of gas in the main flow direction near the counter surface while increasing the stagnant flow time. As a result, the capturing of charged particulates by electrostatic forces can be further promoted. Consequently, the charging effects on solid component in gas G occurring at a charging agglomeration part 10 can be improved as a result of the turbulent flow promoting means 11e. Furthermore, precipitation effects can be improved.

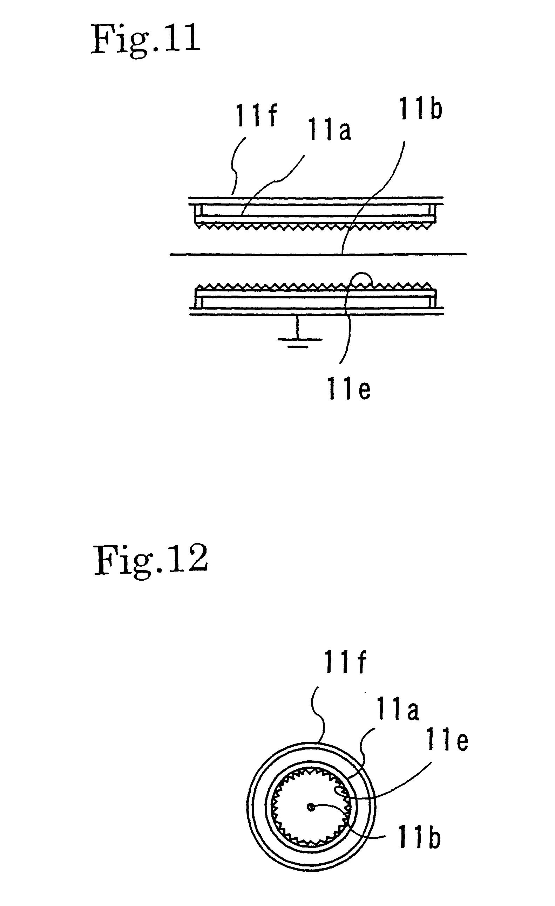

An additional embodiment of the charging agglomeration unit 11 of the charging agglomeration part 10 will now be described. As shown in Figs. 11 to 15, this embodiment is configured such that the gas passage walls of the charging agglomeration unit 11, i.e., the gas passage walls of the charging agglomeration part 10, are formed as a hollow cylindrical body 11f. In addition, the precipitation electrode 11a, which acts as a low voltage electrode, is formed as a conductive hollow cylindrical body and is disposed near the surface of the gas passage walls 11f. In addition, the corona electrode 11b is formed as a linear body, high voltage electrode and is disposed inside the hollow cylindrical body 11f. Both the hollow cylindrical body 11f and the precipitation electrode 11a may be formed of conductive materials. Alternatively, the hollow cylindrical body 11f may be formed of insulating materials and the precipitation electrode 11a may be formed of conductive materials, such that the surface of the charging agglomeration unit 11 is electrically insulated by the hollow cylindrical body 11f. Therefore, safety versus short-circuiting and the like is increased.

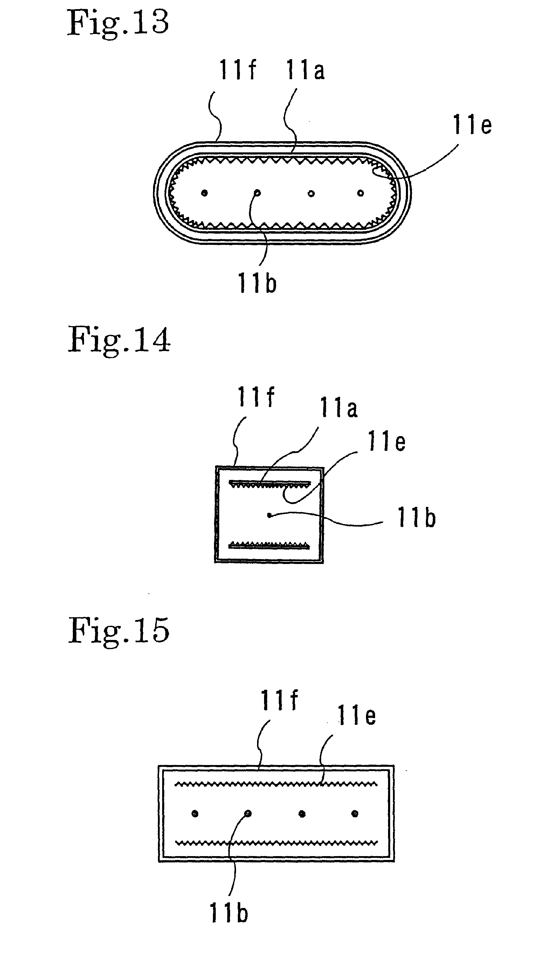

Additionally, as shown in Figs. 11 to 14, a turbulent flow promoting means 11e may be installed on the surface or near the surface of precipitation electrode 11a, or alternatively as shown in Fig. 15, the precipitation electrode 11a may be formed as a turbulent flow promoting means 11e. As a result of these configurations, the effects of the turbulent flow promoting means 11e can be obtained.

This configuration is such that the precipitation electrode 11a is formed discrete from the hollow cylindrical body 11f, and therefore it becomes no longer necessary for the precipitation electrode 11a to provide the functionality of gas passage walls. For that reason, it becomes viable for the precipitation electrode 11a to be gas-permissible, and its surface area can be increased. For that reason, its agglomerating and enlarging effects can be increased further. In addition, by forming the hollow cylindrical body 11f as an insulating body, the surface of the charging agglomeration unit 11 can be electrically insulated. Therefore, safety versus short-circuiting and the like can be increased.

### INDUSTRIAL APPLICABILITY

The beneficial effects of the gas treatment device of the present invention can be used not only as a gas treatment device for exhaust gas from internal combustion engines such as diesel engines mounted onboard automobiles, but also as a gas treatment device for exhaust gases from various industrial machines and stationary internal combustion engines, factory gases, power plant gases, and the like, and additionally as a gas treatment device for various facilities such as manufacturing facilities and medical facilities.

## Claims

1. A gas treatment device comprising a charging agglomeration part which charges and agglomerates components targeted for collection in gas by utilizing corona discharge, and a filter part for collecting the agglomerated components, **characterized that** the charging agglomeration part is disposed in the upstream side of gas flow, and the filter part is disposed in the downstream side of gas flow.

2. The gas treatment device according to claim 1, **characterized that** an oxidation catalyst is installed downstream to the filter part.

3. The gas treatment device according to claim 1 or 2, **characterized that** the filter part comprises a metal filter.

4. The gas treatment device according to any one of claims 1 to 3, **characterized that** the device is configured to cool the gas at the charging agglomeration part in the case where the gas to be treated is at a temperature not less than 100°C and not more than 650°C.

5. The gas treatment device according to any one of claims 1 to 4, **characterized that** the precipitation electrode of the charging agglomeration part is formed as a hollow cylindrical body low voltage electrode, the corona electrode is formed as a linear body high voltage electrode disposed inside the hollow cylindrical body, and the hollow cylindrical body is configured to act as both the passage walls of a gas passage and a gas cooling part.

6. The gas treatment device according to any one of claims 1 to 5, **characterized that** the precipitation electrode of the charging agglomeration part is formed as a hollow cylindrical body low voltage electrode, the corona electrode is formed as a linear body high voltage electrode disposed inside the hollow cylindrical body, and a turbulent flow promoting means which promotes turbulent flow in the gas flow near the inner surface of the hollow cylindrical body is installed on or near the surface of the hollow cylindrical body.

7. The gas treatment device according to any one of claims 1 to 4, **characterized that** the gas passage walls of the charging agglomeration part are formed as a hollow cylindrical body, the precipitation electrode which acts as a low voltage electrode is formed as a hollow cylindrical body having a conductive turbulent flow promoting means disposed near the surface of the gas passage walls, and the corona electrode is formed as a linear body high voltage electrode disposed inside the hollow cylindrical body.

8. The gas treatment device according to any one of claims 5 to 7, **characterized that** the charging agglomeration part is formed by arranging in parallel a plurality of charging agglomeration units having the corona electrode and the hollow cylindrical body.
